# EUROPEAN PATENT SPECIFICATION

(11) **EP 3 139 774 B1**
(45) Date of publication and mention of the grant of the patent: **24.07.2019**
(21) Application number: 15719459.8
(22) Date of filing: 24.04.2015
(51) Int. Cl.: A23L 19/18, A23L 29/10, A23L 29/269, A23L 27/00, A23L 35/00, A23P 10/35, A23P 20/18, A23D 7/005, A23D 7/01

(54) **SNACK FOOD SEASONING**
GEWÜRZ FÜR SNACKLEBENSMITTEL
ASSAISONNEMENT DE GRIGNOTINES

(30) Priority: 01.05.2014 GB 201407712
(43) Date of publication of application: 15.03.2017
(73) Proprietor: Frito-Lay Trading Company GmbH, 3011 Bern (CH)
(72) Inventor: BERI, Akash, Leicester LE4 1ET (GB); ALLEN, Rachael, Leicester LE4 1ET (GB); LINTER, Bruce, Leicester LE4 1ET (GB); HAMILTON, Ian, Edgbaston B15 2TT (GB); NORTON, Ian, Edgbaston B15 2TT (GB)
(74) Representative: Jenkins, Peter David
(86) International application number: PCT/EP2015/058989
(87) International publication number: WO 2015/165831

(56) References cited:
- WO-A1-2010/146350
- US-A- 5 891 494
- FRASCH-MELNIK S ET AL: "Fat-crystal stabilised w/o emulsions for controlled salt release", JOURNAL OF FOOD ENGINEERING, BARKING, ESSEX, GB, vol. 98, no. 4, 1 June 2010 (2010-06-01), pages 437-442, XP026934592, ISSN: 0260-8774, DOI: 10.1016/J.JFOODENG.2010.01.025 [retrieved on 2010-01-28]
- NADIN MAXIME ET AL: "Fat crystal-stabilized water-in-oil emulsions as controlled release systems", LWT- FOOD SCIENCE AND TECHNOLOGY, ACADEMIC PRESS, UNITED KINGDOM, vol. 56, no. 2, 8 November 2013 (2013-11-08), pages 248-255, XP028811612, ISSN: 0023-6438, DOI: 10.1016/J.LWT.2013.10.044

## Description

The present invention relates to a method of topically seasoning a snack food, such as a starch-based snack food for example a potato chip or an expanded snack food produced from a starch-based snack food pellet. The present invention also relates to a snack food produced by the above method and is strictly defined by the claims.

It is well known to employ topical seasoning for flavouring snack foods, for example starch-based snack foods, typically in the form of snack chips, such as potato chips or expanded snack foods produced from a starch-based snack food pellet. On subsequent cooking, the pellet expands to produce an expanded low density porous snack food.

Known topical seasonings include triglycerides, in the form of oil, typically vegetable oil such as sunflower oil, since many snack foods require a topical oil seasoning to meet the taste demands of the consumer. The oil tends to provide the required texture and mouth feel to savoury snacks, particularly salty snacks. Such topical seasonings may include sodium chloride crystals, in micronised or larger particle dimension, mixed with other seasoning ingredients.

There is a general desire to reduce the oil and fat content of many foods, including processed foods such as snack foods. However, for snack foods, there is a problem of achieving a reduced oil or fat content of the snack food product, for example by reducing the oil content of, or eliminating the presence of oil in, the topical seasoning, while also achieving the desired taste, texture and mouth feel sensation required by consumers.

WO-A-2010/146350 discloses comestible products comprising a water-in-oil emulsion comprising cocoa butter and a fat-crystal stabilised aqueous phase. US 5891494 discloses a method of coating chips or crisps comprising coating the chips or crisps in an emulsion comprising hydrolysed potato scraps, groundnut oil and salt.

The present invention aims to solve this problem of the production of known topical seasoning for snack foods.

The present invention aims to provide a topical seasoning for snack foods having a reduced oil content but without diminishing the desired taste, texture and mouth feel sensation required by consumers and provided by conventional topical oil seasonings.

Accordingly, the present invention provides a method of topically seasoning snack foods, the topical seasoning being in the form of an emulsion and comprising a plurality of seasoning particles as a particulate phase within a continuous oil phase, the seasoning particles comprising a shell surrounding an encapsulated central core, the shell comprising a matrix including at least one solid lipid and a shell stabilising emulsifier, and the core comprising an aqueous phase.

The present invention further provides a snack food seasoned by the method of the present invention, wherein the application dosage of the topical seasoning provides a topical seasoning concentration of from 5 to 10 wt% based on the weight of the seasoned snack food.

The snack food may be composed of a cut vegetable piece, such as a slice, or may have been prepared from a dough which has been shaped into a desired shape. The snack food may be an expanded snack food prepared from a pellet. The snack food has been cooked, for example by fried, baked, microwaved, directly extruded or popped.

Preferred features of all of these aspects of the present invention are defined in the dependent claims.

Embodiments of the present invention will now be described by way of example only, with reference to the accompanying drawings, in which:
Figure 1 is a schematic view of a seasoning particle in a topical seasoning for snack foods according to an embodiment of the present invention; and
Figure 2 is a flow chart showing steps in the production of the seasoning particle of Figure 1.

The present invention is at least partly predicated on the finding by the present inventors that an aqueous composition, either as water or as an aqueous gel, can be present in an encapsulated central core surrounded by a shell comprising a matrix including at least one solid lipid, which can form a seasoning particle which has particular application as a topical seasoning for snack foods.

Surprisingly it has been found that encapsulating the aqueous composition within a lipid shell can provide a reduced oil content in topical seasoning, thereby permitting a lower oil and fat content of snack food products to be achieved, without negatively impacting on the achievement of the desired taste, texture and mouth feel sensation required by consumers as compared to conventional topical oil seasonings.

In effect, the oil is partly provided in a shell form encapsulating an aqueous core; the aqueous core displaces a proportion of the oil content, but since the seasoning particle has a shell comprising the triglyceride in the oil, and the shell has a robustness so as not to have a high degree of dissolution, dispersion or fracture when present in the mouth, the taste, texture and mouth feel sensation are not significantly affected.

The lipid shell is formulated so that it does not tend to dissolve, disperse or fracture in the mouth, despite an elevated temperature, shear forces produced by chewing and the aqueous environment provided by saliva, so that the aqueous core tends not to be released into the mouth.

The result is a lower oil topical seasoning with a taste, texture and mouth feel sensation which are associated by consumers with conventional topical oil seasonings.

The seasoning particles are produced, and are provided for the seasoning operation, in a liquid oil, for example sunflower oil, which acts as a sprayable liquid vehicle for controllably dispensing the seasoning particles onto the surface of the snack food. The use of a topical oil seasoning is well known in the snack food industry. The conventional spraying equipment can be used to dispense, in a single operation, both topical oil and seasoning particles containing the aqueous core.

According to the present invention, there is provided a method of topically seasoning snack foods.

The seasoning comprises a plurality of seasoning particles.

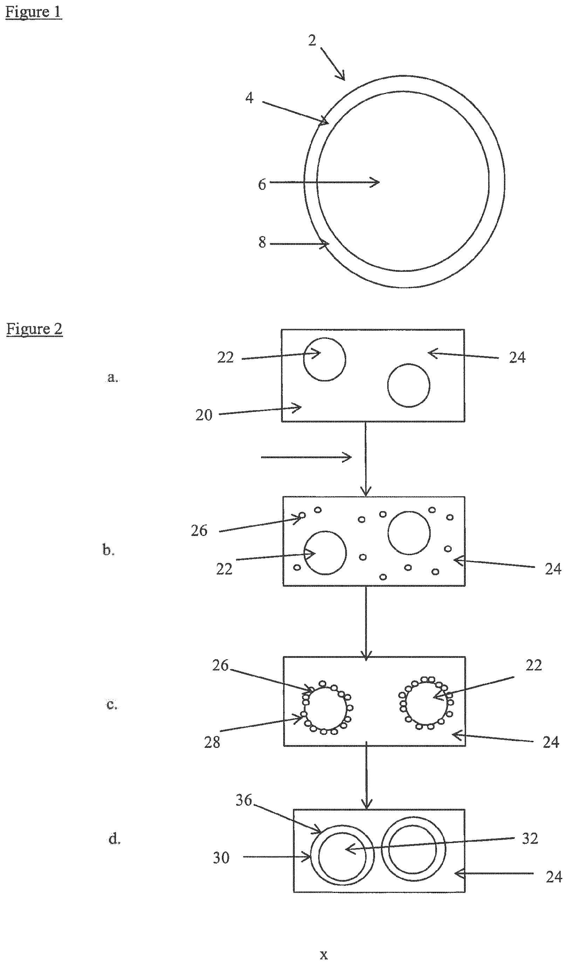

Referring to Figure 1 which shows a schematic view of a seasoning particle in a topical seasoning for snack foods used in according to the method of the present invention, the seasoning particles 2 comprise a shell 4 surrounding an encapsulated central core 6. The shell 4 comprises a matrix 8 including at least one solid lipid and the core 6 comprises an aqueous phase.

In one embodiment, the core 6 comprises water.

In another embodiment, the core 6 comprises an aqueous gel, including a water soluble polysaccharide, for example xanthan gum or calcium alginate, as a gelling agent. However, other water soluble polysaccharide gelling agents may be employed. Typically, the aqueous gel has a polysaccharide concentration of from 0.5 to 5 wt%, optionally from 1 to 2 wt%, typically about 1.5 wt%, based on the weight of the aqueous gel.

Typically, the core 6 is substantially spherical. The core 6 may have a maximum width dimension of from 2 to 100 µm. The core 6 may have diameter which is from 15 to 96% of a diameter of the particle 2. Typically, the shell 4 is substantially spherical. The shell 4 may have a maximum width dimension of from 10 to 150 µm and/or a wall thickness of from 1 to 75µm. The shell 4 may have a wall thickness which is from 2 to 42.5% of a diameter of the particle 2.

Typically, the at least one solid lipid comprises at least one crystalline fat, for example the lipid comprises at least one triglyceride.

Most preferably, the at least one solid lipid comprises a mixture of at least one monoglyceride and at least one triglyceride. In such a mixture, the at least one solid lipid comprises from 0.25 to 5 wt%, optionally from 0.25 to 1 wt%, monoglyceride(s) and from 95 to 99.75 wt%, optionally from 99 to 99.75 wt%, triglyceride(s), each amount being based on the total weight of the mixture of monoglyceride(s) and triglyceride(s).

The shell 4 further comprises, in addition to the monoglyceride(s) and triglyceride(s), a shell stabilising emulsifier, which functions to reduce the tendency of the glyceride shell to dissolve, disperse or fracture when present in the mouth when the snack food is consumed. The shell stabilising emulsifier typically comprises a polymeric emulsifier, typically a polyglycerol fatty acid ester, for example polyglycerol polyricinoleate (PGPR), or a phospholipid emulsifier, such as lecithin. Typically, the shell stabilising emulsifier has an approximate concentration in the shell of from 0.2 to 2 wt%, optionally from 0.5 to 1 wt%, based on the weight of the shell, which concentration is substantially the same concentration of the emulsifier based on the weight of the emulsion.

As described hereinbelow with respect to the manufacture of the particle, the shell is stabilised by the shell stabilising emulsifier, which is believed, without being bound by any theory, to migrate to the water/oil interface in a pre-emulsion so as to function to lower the surface energy of the water/oil interface and stabilise water droplets in the oil phase. Furthermore, the monoglyceride functions as an emulsifier to form a Pickering particle in the oil phase, which stabilises the shell. The Pickering particle comprises the monoglyceride- and triglyceride-containing lipid shell, which further comprises the shell stabilising emulsifier, surrounding the core which comprises the aqueous phase, thereby forming a water-in-oil emulsion with the stabilised shell surrounding the aqueous phase.

The monoglyceride surfactant functions to form seed crystals during formation of the shell when the lipid mixture is cooled from the melt to below the melting temperature of the lipid components. These seed crystals are formed at, or migrate to, the interface of the aqueous phase and the oil phase in the water-in-oil emulsion, which has a lower surface energy as a result of the shell stabilising emulsifier. The seed crystals agglomerate together to form a shell surrounding an aqueous phase droplet. After the monoglyceride seed crystals have been formed, the triglyceride crystallises onto the seed crystals, thereby forming a coherent shell surrounding the aqueous phase core. The coherent shell includes the shell stabilising emulsifier which increases the robustness of the shell against dissolution, dispersion or fracture when consumed in the mouth. In this way, the encapsulated aqueous phase remains encapsulated when the snack food carrying the encapsulated particles is employed in the topical seasoning.

Although the presence of the monoglyceride surfactant, which acts as an emulsifier, causes fat crystals preferentially to agglomerate at the oil phase/aqueous phase interface and thereby form a shell, some solid fat crystals may remain within the continuous oil phase of the emulsion and are not incorporated into a shell.

Preferably, the at least one solid lipid comprises a vegetable-based triglyceride, for example an unsaturated triglyceride derived from at least one of sunflower oil and cottonseed oil. Preferably, a high oleic acid sunflower oil is employed. Typically, the sunflower oil comprises at least 80 wt% oleic acid based on the total weight of fatty acids in the sunflower oil. In preferred embodiments, the at least one solid lipid has a melting point of from 30 to 95 °C.

Preferably, the at least one solid lipid also comprises a saturated monoglyceride, which is a fatty acid glyceryl monoester, with the fatty acid chain having an average of from 10 to 20 carbon atoms, typically an average of from 12 to 18 carbon atoms. Typically the monoglyceride has been distilled to provide the desired purity of the selected carbon chain length monoglyceride. The monoglyceride is typically derived from sunflower, rapeseed, palm and/or soya bean oil. Alternatively a synthetic monoglyceride is employed. A typical monoglyceride is an emulsifier comprising glycerol monolaurate, glycerol monostearate or an emulsifier available in commerce from Danisco, UK, under the trade name Dimodan HP or Dimodan P, or any mixture thereof.

In some preferred embodiments, the at least one solid lipid comprises from 3 to 15 wt% of the total weight of the seasoning particle. In some preferred embodiments, the core comprises from 15 to 96 wt% of the total weight of the seasoning particle.

The topical seasoning is in the form of an emulsion, with the plurality of seasoning particles comprising a particulate phase within a continuous oil phase. The oil phase may comprise at least one of a monoglyceride, a triglyceride or a mixture thereof, for example a vegetable-based oil, typically an unsaturated oil derived from at least one of sunflower oil and cottonseed oil. Preferably, a high oleic acid sunflower oil is employed. Preferably, the sunflower oil comprises at least 80 wt% oleic acid based on the total weight of fatty acids in the sunflower oil.

The at least one solid lipid may comprise from 1 to 20 wt% of the total oil and fat content of the topical seasoning and the continuous oil phase comprises from 80 to 99 wt% of the total oil and fat content of the topical seasoning. Typically, the total oil and fat content of the topical seasoning is from 40 to 80 wt% of the total weight of the topical seasoning.

A snack food may be seasoned according to the method of the present invention using any known seasoning technique or apparatus. For example, the topical seasoning in the form of an emulsion may be sprayed from a spray head onto the cooked snack food prior to packaging.

The topical seasoning for use in the method present invention, as described above, may be made according to the following method, with reference to Figure 2.

Aspects of this method for forming fat-crystal stabilised water-in-oil emulsions are disclosed in "Fat-crystal stabilised w/o emulsions for controlled salt release", Sarah Frasch-Melnik et al, Journal of Food Engineering 98 (2010) 437-442, "W₁/O/W₂ double emulsions stabilised by fat crystals - Formulation, stability and salt release", Sarah Frasch-Melnik et al, Journal of Colloid and Interface Science 350 (2010) 178-185 and "Fat-crystal stabilised water-in-oil emulsions as controlled release systems", Maxime Nadin et al, LWT-Food Science and Technology 56 (2014) 248-255. Although these publications disclose the production of stabilised water-in-oil emulsions for releasing a component such as salt, there is no disclosure or hint of the use of such emulsions as topical seasoning for snack food, or the unexpected effect of the reduction of oil content of such topical seasonings without negatively impacting on taste, texture or mouth feel of the snack food.

In a first step, at least one lipid, to form the shell, is heated so as to be liquefied. The at least one lipid comprises the composition described above with respect to Figure 1. Typically, the at least one lipid is heated to a temperature of at least 10 °C above the melting point of the lipid mixture, ideally at least 80 °C.

Then, as illustrated in Figure 2a, an aqueous phase, preferably pre-heated to the same temperature as that of the at least one lipid, is mixed with the liquefied at least one lipid to form a water-in-oil pre-emulsion 20 comprising aqueous phase particles or droplets 22, in a continuous oil phase 2 aqueous phase may comprise water and a solution, dispersion or suspension of the shell stabilising emulsifier. The shell stabilising emulsifier may have a concentration of from 0.2 to 2 wt%, optionally from 0.5 to 1 wt%, based on the weight of the emulsion.

In the embodiment to form an aqueous gel as the core, the polysaccharide gelling agent has a concentration in the aqueous phase of from 0.5 to 5 wt%, optionally from 1 to 2 wt%, typically about 1.5 wt%, based on the weight of the aqueous phase.

Typically the weight ratio of the aqueous solution to the at least one lipid is from 30:70 to 70:30, typically about 60:40.

The pre-emulsion 20 is subjected to additional emulsification of the initial mixture to form a more well dispersed water in oil emulsion comprising aqueous phase particles or droplets in a continuous oil phase, whilst simultaneously cooling the emulsion to form a plurality of seasoning particles in the oil phase.

As illustrated in Figure 2b, the emulsification and cooling forms solid crystalline glyceride particles 26 in the oil phase. These constitute seed crystals 26. When the oil phase includes a mixture of a saturated monoglyceride and a triglyceride, as discussed above with respect to Figure 1, the monoglyceride forms the seed crystals 26. These seed crystals 26 are formed at, or migrate to, the interface of the aqueous phase and the oil phase in the water-in-oil emulsion. The interface has been stabilised with the shell stabilising emulsifier.

As illustrated in Figure 2c, the seed crystals 26 agglomerate together at the interface to form a shell 28 surrounding aqueous phase droplets 22.

As illustrated in Figure 2d, after the monoglyceride seed crystals 26 have agglomerated at the interface, the triglyceride crystallises onto the seed crystals 26, thereby forming a coherent shell 30 surrounding the aqueous phase core 32.

The resultant seasoning particles 34 comprise a shell 30 surrounding an encapsulated central core 32. The shell 30 comprises a matrix 36 including the at least one solid lipid and the core 32 comprises the aqueous phase, which may include the optional polysaccharide gel.

As described above, during the additional emulsification the cooling forms solid lipid crystals in the oil phase which migrate to an interface between the aqueous phase particles and the continuous oil phase, and the crystals agglomerate to form the shell.

During the additional emulsification step, the emulsion is cooled to a temperature below 30°C, for example below 25 °C. Typically, the additional emulsification is at least partially carried out in a cooling unit which is a scrape-surface heat exchanger having at least one surface cooled to a temperature of from 5 to 30 °C, optionally from 5 to 25 °C. The cooling unit may comprise an outer housing defining a cooling chamber and a rotating scraper mechanism within the chamber which scrapes solid lipid material off an inner surface of the outer housing. Typically, the rotating scraper mechanism has a rotational speed of from 500 to 2000 rpm.

After the additional emulsification, the plurality of seasoning particles in the oil phase may be passed, in a second mixing step, through a mixer to cause breakage of solid lipid linkages between seasoning particles. This may also reduce the particle size. The mixer may comprise a rotating pin stirrer.

After the second mixing step, the resultant mixture may optionally be recycled through the additional emulsification which again simultaneously cools the emulsion. Optionally, after the additional emulsification, the resultant mixture may be recycled through the second mixing step. Such recycling steps may cause further breakage of any solid lipid linkages between seasoning particles and may also further reduce the particle size. However, such linkages tend to provide a desirable creamy mouthfeel to the topical composition when applied to a snack food and so the recycling steps may be avoided.

The product of the final mixing step is an emulsion ready to use as a topical seasoning according to the present invention.

The topical seasoning may be applied to any starch-based snack food, for example a potato chip, which may be baked or fried and/or produced from a potato slice or a dough, or an expanded snack food produced from a starch-based snack food pellet, to apply seasoning thereto. The resultant savoury or salty snack food, such as a potato chip, has a lower oil/fat content, yet with a similar taste, texture and mouthfeel, as compared to the same snack food seasoned with a conventional topical oil seasoning.

The application dosage of the topical seasoning is from 5 to 10 wt%, for example from 7 to 8 wt%, based on the weight of the seasoned snack food such as potato chips. The topical seasoning typically comprises from 65 to 70 wt% oil/fat, thereby yielding a 30 to 35 wt% oil/fat reduction in the topical seasoning.

The present invention is further illustrated with reference to the following non-limiting Examples.

### Comparative Example 1

Potato chips, which had been produced by baking a potato-containing dough, were spray coated with a conventional topical oil seasoning comprising high oleic acid sunflower oil. The application dosage was selected to provide 7.4 wt% topical oil based on the weight of the seasoned potato chips.

The seasoned potato chips were subjected to a taste test, and exhibited a good texture and mouth feel.

### Example 1

A water-in-oil emulsion was formed comprising 60 wt% aqueous phase and 40 wt% oil phase.

The aqueous phase comprised (a) a shell stabilising emulsifier composed of polyglycerol polyricinoleate (PGPR) having a concentration of 0.7 wt% based on the weight of the aqueous phase, (b) a polysaccharide gelling agent composed of xanthan gum having a concentration of 1.5 wt% based on the weight of the aqueous phase and (c) water.

The oil phase comprised 99.5 wt% high oleic acid sunflower oil and 0.5 wt% Dimodan HP, an emulsifier comprising a distilled saturated monoglyceride. The water-in-oil emulsion was heated to a temperature of 80 °C and mixed in a high shear mixer to form a pre-emulsion. The pre-emulsion was then passed through a scraped-surface heat exchanger (called an "A unit"), and subsequently through a pin stirrer (called a "C unit"), both apparatus being known in the art for making fat-containing emulsions in the food industry. The scraped-surface heat exchanger and the pin stirrer were both cooled by water at a temperature of 5 °C. The oil phase in the water-in-oil emulsion rapidly crystallised in the scraped-surface heat exchanger to form fat crystals, as discussed above, and the pin stirrer applied shear to cause phase inversion under cooling to prevent the fat crystals from melting.

After exiting the pin stirrer, the resulting product comprised a water-in-oil emulsion of seasoning particles in a continuous oil phase, the particles comprising a lipid shell surrounding an encapsulated central core comprising an aqueous gel.

The emulsion was sprayed onto the same baked potato chips as used in Comparative Example 1 to provide a topical seasoning. The application dosage was selected to provide 7.4 wt% topical seasoning, having a 65.6 wt% oil/fat content in the form of triglyceride and monoglyceride, based on the weight of the seasoned potato chips.

The seasoned potato chips were subjected to the same taste test as Comparative Example 1. The seasoned potato chips of Example 1 exhibited a similarly good texture and mouth feel as Comparative Example 1 even though the oil/fat content of the topical seasoning had been reduced by 34.4 wt%.

### Example 2

Example 1 was repeated, but modified so as to omit the gelling agent.

The emulsion was sprayed onto the same potato chips as used in Example 1 to provide a topical seasoning. The application dosage was selected to provide 7.4 wt% topical seasoning, having a 65.6 wt% oil/fat content in the form of triglyceride and monoglyceride, based on the weight of the seasoned potato chips.

The seasoned potato chips were subjected to the same taste test as Comparative Example 1. The seasoned potato chips of Example 1 exhibited a similarly good texture and mouth feel as Comparative Example 1 even though the oil/fat content of the topical seasoning had been reduced by 34.4 wt%.

A comparison of Examples 1 and 2 with Comparative Example 1 shows that the topical seasoning used in the method of the present invention can readily be used to reduce the oil/fat content of snack foods by modification of the topical oil seasoning but without compromising the desired taste and texture of the snack foods.

Surprisingly it has been found therefore that encapsulating an aqueous phase, which may or may not be a gel, within a lipid shell can provide a reduced oil/fat content, since the aqueous phase replaces a portion of the oil/fat phase, in topical seasoning, thereby permitting lower oil/fat content of snack food products to be achieved.

As a result of the presence of the shell stabilising emulsifier in the lipid shell, the lipid shell does not tend to dissolve, disperse or fracture in the mouth, even when subjected to elevated temperature, high shear forces caused by chewing, and the aqueous environment provided by saliva. Accordingly, the encapsulated aqueous phase remains encapsulated and so does not affect the flavour, texture or mouth feel provided by the topical seasoning, which retains the desired properties of a conventional topical oil seasoning found to be acceptable to the consumer.

## Claims

1. A method of topically seasoning a snack food, the method comprising topically applying a topical seasoning in the form of an emulsion and comprising a plurality of seasoning particles as a particulate phase within a continuous oil phase, the seasoning particles comprising a shell surrounding an encapsulated central core, the shell comprising a matrix including at least one solid lipid and a shell stabilising emulsifier, and the core comprising an aqueous phase.

2. A method of topically seasoning a snack food according to claim 1 wherein the core comprises water.

3. A method of topically seasoning a snack food according to claim 1 wherein the core comprises an aqueous gel comprised of water and a gelling agent, optionally wherein the gelling agent is a polysaccharide.

4. A method of topically seasoning a snack food according to claim 3 wherein the gelling agent has a concentration of from 0.5 to 5 wt%, optionally from 1 to 2 wt%, further optionally about 1.5 wt%, based on the weight of the aqueous gel.

5. A method of topically seasoning a snack food according to any foregoing claim wherein the shell stabilising emulsifier comprises at least one polymeric emulsifier, optionally a polyglycerol fatty acid ester, further optionally polyglycerol polyricinoleate, and/or at least one phospholipid, optionally lecithin, optionally wherein the shell stabilising emulsifier has a concentration in the shell of from 0.2 to 2 wt%, further optionally from 0.5 to 1 wt%, based on the weight of the shell.

6. A method of topically seasoning a snack food according to any foregoing claim wherein:
a. the core is substantially spherical; and/or
b. the core has a maximum width dimension of from 2 to 100 µm; and/or
c. the core has diameter which is from 15 to 96% of a diameter of the particle; and/or
d. the at least one solid lipid comprises at least one crystalline fat.

7. A method of topically seasoning a snack food according to any foregoing claim wherein the at least one solid lipid comprises at least one triglyceride.

8. A method of topically seasoning a snack food according to claim 7 wherein the at least one solid lipid comprises a mixture of at least one monoglyceride and at least one triglyceride, optionally wherein the mixture of at least one monoglyceride and at least one triglyceride comprises from 0.25 to 5 wt%, further optionally from 0.25 to 1 wt%, monoglyceride(s) and from 95 to 99.75 wt%, further optionally from 99 to 99.75 wt%, triglyceride(s), each amount being based on the total weight of the mixture of monoglyceride(s) and triglyceride(s), further optionally wherein the monoglyceride comprises a saturated monoglyceride, which is a fatty acid glyceryl monoester, with the fatty acid chain having an average of from 10 to 20 carbon atoms, optionally an average of from 12 to 18 carbon atoms, yet further optionally wherein the monoglyceride comprises at least one of glycerol monolaurate, glycerol monostearate or a mixture thereof.

9. A method of topically seasoning a snack food according to any foregoing claim wherein the at least one solid lipid comprises a vegetable-based triglyceride, optionally wherein the vegetable-based triglyceride is an unsaturated fat derived from at least one of sunflower oil and cottonseed oil, further optionally wherein the sunflower oil comprises at least 80 wt% oleic acid based on the total weight of fatty acids in the sunflower oil.

10. A method of topically seasoning a snack food according to any foregoing claim wherein:
a. the at least one solid lipid has a melting point of from 30 to 95 °C; and/or
b. the shell is substantially spherical; and/or
c. the shell has a maximum width dimension of from 10 to 150 µm and/or a wall thickness of from 1 to 75µm; and/or
d. wherein the shell has a wall thickness which is from 2 to 42.5% of a diameter of the particle; and/or
e. the at least one solid lipid comprises from 3 to 15 wt% of the total weight of the seasoning particle; and/or
f. the core comprises from 15 to 96 wt% of the total weight of the seasoning particle; and/or
g. the oil phase comprises at least one of a monoglyceride, a triglyceride or a mixture thereof.

11. A method of topically seasoning a snack food according to any foregoing claim wherein the oil phase comprises a vegetable-based oil, optionally wherein the vegetable-based oil is an unsaturated oil derived from at least one of sunflower oil and cottonseed oil, further optionally wherein the sunflower oil comprises at least 80 wt% oleic acid based on the total weight of fatty acids in the sunflower oil.

12. A method of topically seasoning a snack food according to any foregoing claim wherein:
a. at least one solid lipid comprises from 1 to 20 wt% of the total oil and fat content of the topical seasoning and the continuous oil phase comprises from 80 to 99 wt% of the total oil and fat content of the topical seasoning; and/or
b. the total oil and fat content of the topical seasoning is from 40 to 80 wt%, typically from 65 to 70 wt%, of the total weight of the topical seasoning; and/or
c. the topical seasoning is applied by spraying.

13. A snack food produced by the method of any one of claims 1 to 12 wherein the application dosage of the topical seasoning provides a topical seasoning concentration of from 5 to 10 wt% based on the weight of the seasoned snack food.

14. A snack food according to claim 13 wherein the application dosage of the topical seasoning provides a topical seasoning concentration of from 7 to 8 wt% based on the weight of the seasoned snack food.

15. A snack food according to claim 13 or claim 14 wherein the snack food is a starch-based snack food selected from a potato chip, which may be baked or fried and/or produced from a potato slice or a dough, or an expanded snack food produced from a starch-based snack food pellet.

## Patentansprüche

1. Verfahren zum topischen Würzen eines Snack-Lebensmittels, wobei das Verfahren das topische Aufbringen eines topischen Würzmittels in Form einer Emulsion und mit mehreren Würzpartikeln als partikuläre Phase innerhalb einer zusammenhängenden Ölphase beinhaltet, wobei die Würzpartikel eine Hülle aufweisen, die einen eingekapselten zentralen Kern umgibt, wobei die Hülle eine Matrix umfasst, die wenigstens ein festes Lipid und einen Hüllenstabilisationsemulgator beinhaltet, und der Kern eine wässrige Phase umfasst.

2. Verfahren zum topischen Würzen eines Snack-Lebensmittels nach Anspruch 1, wobei der Kern Wasser umfasst.

3. Verfahren zum topischen Würzen eines Snack-Lebensmittels nach Anspruch 1, wobei der Kern ein wässriges Gel umfasst, das aus Wasser und einem Geliermittel besteht, wobei das Geliermittel optional ein Polysaccharid ist.

4. Verfahren zum topischen Würzen eines Snack-Lebensmittels nach Anspruch 3, wobei das Geliermittel eine Konzentration von 0,5 bis 5 Gew.-%, optional von 1 bis 2 Gew.-%, ferner optional etwa 1,5 Gew.-% bezogen auf das Gewicht des wässrigen Gels hat.

5. Verfahren zum topischen Würzen eines Snack-Lebensmittels nach einem vorherigen Anspruch, wobei der Hüllenstabilisationsemulgator wenigstens einen polymeren Emulgator, optional einen Polyglycerinfettsäureester, ferner optional Polyglycerolpolyricinoleat, und/oder wenigstens ein Phospholipid, optional Lecithin, umfasst, wobei der Hüllenstabilisationsemulgator optional eine Konzentration in der Hülle von 0,2 bis 2 Gew.-%, ferner optional von 0,5 bis 1 Gew.-% bezogen auf das Gewicht der Hülle hat.

6. Verfahren zum topischen Würzen eines Snack-Lebensmittels nach einem vorherigen Anspruch, wobei:
a. der Kern im Wesentlichen kugelförmig ist; und/oder
b. der Kern ein maximales Breitenmaß von 2 bis 100 µm hat; und/oder
c. der Kern einen Durchmesser hat, der 15 bis 96 % eines Durchmessers des Partikels beträgt; und/oder
d. das wenigstens eine feste Lipid wenigstens ein kristallines Fett umfasst.

7. Verfahren zum topischen Würzen eines Snack-Lebensmittels nach einem vorherigen Anspruch, wobei das wenigstens eine feste Lipid wenigstens ein Triglycerid umfasst.

8. Verfahren zum topischen Würzen eines Snack-Lebensmittels nach Anspruch 7, wobei das wenigstens eine feste Lipid ein Gemisch aus wenigstens einem Monoglycerid und wenigstens einem Triglycerid umfasst, wobei das Gemisch aus wenigstens einem Monoglycerid und wenigstens einem Triglycerid optional 0,25 bis 5 Gew.-%, ferner optional 0,25 bis 1 Gew.-% Monoglycerid(e) und 95 bis 99,75 Gew.-%, ferner optional 99 bis 99,75 Gew.-% Triglycerid(e) umfasst, wobei jede Menge auf dem Gesamtgewicht des Gemischs aus Monoglycerid(en) und Triglycerid(en) beruht, wobei das Monoglycerid ferner optional ein gesättigtes Monoglycerid umfasst, das ein Fettsäureglycerylmonoester ist, wobei die Fettsäurekette durchschnittlich 10 bis 20 Kohlenstoffatome, optional durchschnittlich 12 bis 18 Kohlenstoffatome hat, wobei das Monoglycerid ferner optional Glycerinmonolaurat, Glycerinmonostearat und/oder ein Gemisch davon umfasst.

9. Verfahren zum topischen Würzen eines Snack-Lebensmittels nach einem vorherigen Anspruch, wobei das wenigstens eine feste Lipid ein Triglycerid auf pflanzlicher Basis umfasst, wobei das Triglycerid auf pflanzlicher Basis optional ein ungesättigtes Fett ist, das von Sonnenblumenöl und/oder Baumwollsamenöl stammt, wobei das Sonnenblumenöl ferner optional wenigstens 80 Gew.-% Ölsäure bezogen auf das Gesamtgewicht der Fettsäuren im Sonnenblumenöl umfasst.

10. Verfahren zum topischen Würzen eines Snack-Lebensmittels nach einem vorherigen Anspruch, wobei:
a. das wenigstens eine feste Lipid einen Schmelzpunkt von 30 bis 95°C hat; und/oder
b. die Hülle im Wesentlichen kugelförmig ist; und/oder
c. die Hülle ein maximales Breitenmaß von 10 bis 150 µm und/oder eine Wanddicke von 1 bis 75 µm hat; und/oder
d. die Hülle eine Wanddicke hat, die 2 bis 42,5 % eines Durchmessers des Partikels beträgt; und/oder
e. das wenigstens eine feste Lipid 3 bis 15 Gew.-% des Gesamtgewichts des Würzpartikels ausmacht; und/oder
f. der Kern 15 bis 96 Gew.-% des Gesamtgewichts des Würzpartikels ausmacht; und/oder
g. die Ölphase ein Monoglycerid, ein Triglycerid und/oder ein Gemisch davon umfasst.

11. Verfahren zum topischen Würzen eines Snack-Lebensmittels nach einem vorherigen Anspruch, wobei die Ölphase ein Öl auf pflanzlicher Basis umfasst, wobei das Öl auf pflanzlicher Basis optional ein ungesättigtes Öl ist, das von Sonnenblumenöl und/oder Baumwollsamenöl stammt, wobei das Sonnenblumenöl ferner optional wenigstens 80 Gew.-% Ölsäure bezogen auf das Gesamtgewicht der Fettsäuren im Sonnenblumenöl umfasst.

12. Verfahren zum topischen Würzen eines Snack-Lebensmittels nach einem vorherigen Anspruch, wobei
a. wenigstens ein festes Lipid 1 bis 20 Gew.-% des gesamten Öl- und Fettgehalts des topischen Würzmittels ausmacht und die zusammenhängende Ölphase 80 bis 99 Gew.-% des gesamten Öl- und Fettgehalts des topischen Würzmittels ausmacht; und/oder
b. der gesamte Öl- und Fettgehalt des topischen Würzmittels 40 bis 80 Gew.-%, typischerweise 65 bis 70 Gew.-% des Gesamtgewichts des topischen Würzmittels beträgt; und/oder
c. das topische Würzmittel durch Sprühen aufgebracht wird.

13. Snack-Lebensmittel, das mit dem Verfahren nach einem der Ansprüche 1 bis 12 hergestellt wird, wobei die Anwendungsdosierung des topischen Würzmittels eine topische Würzkonzentration von 5 bis 10 Gew.-% bezogen auf das Gewicht des gewürzten Snack-Lebensmittels bereitstellt.

14. Snack-Lebensmittel nach Anspruch 13, wobei die Anwendungsdosierung des topischen Würzmittels eine topische Würzkonzentration von 7 bis 8 Gew.-% bezogen auf das Gewicht des gewürzten Snack-Lebensmittels bereitstellt.

15. Snack-Lebensmittel nach Anspruch 13 oder Anspruch 14, wobei das Snack-Lebensmittel ein Snack-Lebensmittel auf Stärkebasis ist, ausgewählt aus einem Kartoffelchip, der gebacken oder gebraten und/oder aus einer Kartoffelscheibe oder einem Teig hergestellt werden kann, oder ein expandiertes Snack-Lebensmittel, das aus einem Snack-Lebensmittelpellet auf Stärkebasis hergestellt wird.

## Revendications

1. Procédé pour assaisonner topiquement des grignotines, le procédé consistant à appliquer topiquement un assaisonnement topique sous la forme d'une émulsion et comprenant une pluralité de particules d'assaisonnement en formant une phase particulaire dans une phase huileuse continue, les particules d'assaisonnement comprenant une enveloppe entourant un noyau central encapsulé, l'enveloppe comprenant une matrice contenant au moins un lipide solide et un émulsifiant stabilisateur de l'enveloppe, et le noyau contenant une phase aqueuse.

2. Procédé pour assaisonner topiquement des grignotines selon la revendication 1, dans lequel le noyau contient de l'eau.

3. Procédé pour assaisonner topiquement des grignotines selon la revendication 1, dans lequel le noyau contient un gel aqueux constitué d'eau et d'un agent gélifiant, éventuellement dans lequel l'agent gélifiant est un polysaccharide.

4. Procédé pour assaisonner topiquement des grignotines selon la revendication 3, dans lequel l'agent gélifiant a une concentration de 0,5 à 5 % en poids, éventuellement de 1 à 2 % en poids, en outre éventuellement d'environ 1,5 % en poids, en fonction du poids du gel aqueux.

5. Procédé pour assaisonner topiquement des grignotines selon l'une quelconque des revendications précédentes, dans lequel l'émulsifiant stabilisateur de l'enveloppe contient au moins un émulsifiant polymérique, éventuellement un ester polyglycérolique d'acide gras, en outre éventuellement du polyricinoléate de polyglycérol, et/ou au moins un phospholipide, éventuellement de la lécithine, éventuellement dans lequel l'émulsifiant stabilisateur de l'enveloppe a une concentration dans l'enveloppe de 0,2 à 2 % en poids, en outre éventuellement de 0,5 à 1 % en poids, en fonction du poids de l'enveloppe.

6. Procédé pour assaisonner topiquement des grignotines selon l'une quelconque des revendications précédentes, dans lequel :
a. le noyau est essentiellement sphérique ; et/ou
b. le noyau a une dimension de largeur maximale de 2 à 100 µm ; et/ou
c. le noyau a un diamètre qui représente 15 à 96 % d'un diamètre de la particule ; et/ou
d. le au moins un lipide solide contient au moins une matière grasse cristalline.

7. Procédé pour assaisonner topiquement des grignotines selon l'une quelconque des revendications précédentes, dans lequel le au moins un lipide solide contient au moins un triglycéride.

8. Procédé pour assaisonner topiquement des grignotines selon la revendication 7, dans lequel le au moins un lipide solide contient un mélange d'au moins un monoglycéride et d'au moins un triglycéride, éventuellement dans lequel le mélange d'au moins un monoglycéride et d'au moins un triglycéride comprend de 0,25 à 5 % en poids, en outre éventuellement de 0,25 à 1 % en poids, de monoglycéride(s) et de 95 à 99,75 % en poids, en outre éventuellement de 99 à 99,75 % en poids, de triglycéride(s), chaque quantité étant fonction du poids total du mélange de monoglycéride(s) et de triglycéride(s), en outre éventuellement dans lequel le monoglycéride contient un monoglycéride saturé, qui est un monoester glycérique d'acides gras, la chaîne d'acides gras ayant une moyenne de 10 à 20 atomes de carbone, éventuellement une moyenne de 12 à 18 atomes de carbone, encore en outre éventuellement dans lequel le monoglycéride contient au moins un monolaurate de glycérol, un monostéarate de glycérol ou un mélange de ceux-ci.

9. Procédé pour assaisonner topiquement des grignotines selon l'une quelconque des revendications précédentes, dans lequel le au moins un lipide solide contient un triglycéride à base végétale, éventuellement dans lequel le triglycéride à base végétale est un gras insaturé dérivé d'au moins une huile de tournesol et une huile de coton, en outre éventuellement dans lequel l'huile de tournesol contient au moins 80 % en poids d'acide oléique en fonction du poids total des acides gras contenus dans l'huile de tournesol.

10. Procédé pour assaisonner topiquement des grignotines selon l'une quelconque des revendications précédentes, dans lequel :
a. le au moins un lipide solide a un point de fusion de 30 à 95 °C ; et/ou
b. l'enveloppe est essentiellement sphérique ; et/ou
c. l'enveloppe a une dimension de largeur maximale de 10 à 150 µm et/ou une épaisseur de paroi de 1 à 75 µm ; et /ou
d. dans lequel l'enveloppe a une épaisseur de paroi qui représente 2 à 42,5 % du diamètre d'une particule ; et/ou
e. le au moins un lipide solide contient 3 à 15 % en poids du poids total de la particule d'assaisonnement ; et/ou
f. le noyau contient 15 à 96 % en poids du poids total de la particule d'assaisonnement ; et/ou
g. la phase huileuse contient au moins un monoglycéride, un triglycéride ou un mélange de ceux-ci.

11. Procédé pour assaisonner topiquement des grignotines selon l'une quelconque des revendications précédentes, dans lequel la phase huileuse contient une huile à base végétale, éventuellement dans lequel l'huile à base végétale est une huile insaturée dérivée d'au moins une huile de tournesol et une huile de coton, en outre éventuellement dans lequel l'huile de tournesol contient au moins 80 % en poids d'acide oléique en fonction du poids total des acides gras contenus dans l'huile de tournesol.

12. Procédé pour assaisonner topiquement des grignotines selon l'une quelconque des revendications précédentes, dans lequel :
a. au moins un lipide solide contient 1 à 20 % en poids de la teneur totale en huile et en matières grasses de l'assaisonnement topique et la phase huileuse continue contient 80 à 99 % en poids de la teneur totale en huile et en matières grasses de l'assaisonnement topique ; et/ou
b. la teneur totale en huile et en matières grasses de l'assaisonnement topique est de 40 à 80 % en poids, typiquement de 65 à 70 % en poids, du poids total de l'assaisonnement topique ; et/ou
c. l'assaisonnement topique est appliqué par vaporisation.

13. Grignotines produites par le procédé selon l'une quelconque des revendications 1 à 12, dans lequel le dosage d'application de l'assaisonnement topique fournit une concentration d'assaisonnement topique de 5 à 10 % en poids en fonction du poids des grignotines assaisonnées.

14. Grignotines selon la revendication 13, dans lequel le dosage d'application de l'assaisonnement topique fournit une concentration d'assaisonnement topique de 7 à 8 % en poids en fonction du poids des grignotines assaisonnées.

15. Grignotines selon, soit la revendication 13, soit la revendication 14, dans lequel les grignotines sont des grignotines à base de féculents sélectionnées à partir de croustilles, qui peuvent être cuites au four ou frites et/ou produites à partir de tranches ou d'une pâte de pomme de terre, ou sont des grignotines élargies produites à partir de granulés de grignotines à base de féculents.
